# EUROPÄISCHE PATENTSCHRIFT

(11) **EP 1 997 345 B1**
(45) Veröffentlichungstag und Bekanntmachung des Hinweises auf die Patenterteilung: **26.09.2012**
(21) Anmeldenummer: 07726704.5
(22) Anmeldetag: 08.03.2007
(51) Int. Cl.: H04Q 11/00

(54) **WELLENLÄNGENSELEKTIVER SCHALTER UND VERFAHREN ZUM KANALWEISEN SCHALTEN FÜR EINEN WELLENLÄNGENSELEKTIVEN SCHALTER**
WAVELENGTH-SELECTIVE SWITCH AND METHOD FOR CHANNEL-BY-CHANNEL SWITCHING FOR A WAVELENGTH-SELECTIVE SWITCH
COMMUTATEUR SELECTIF EN LONGUEUR D'ONDES ET PROCEDE POUR LA COMMUTATION PAR CANAL POUR UN INTERRUPTEUR SELECTIF EN LONGUEUR D'ONDES

(30) Priorität: 09.03.2006 DE 102006011001; 19.07.2006 DE 102006033463
(43) Veröffentlichungstag der Anmeldung: 03.12.2008
(73) Patentinhaber: Nokia Siemens Networks GmbH & Co. KG, 81541 München (DE)
(72) Erfinder: SCHIMPE, Robert, 85521 Ottobrunn (DE)
(86) Internationale Anmeldenummer: PCT/EP2007/052159
(87) Internationale Veröffentlichungsnummer: WO 2007/101875

(56) Entgegenhaltungen:
- EP-A- 1 239 695
- WO-A-2005/011322

## Beschreibung

Eindimensionale wellenlängenselektive Schalter, d. h. solche mit eindimensionalen Schalterzeilen sind während des Schaltvorganges nicht blockierungsfrei, respektive nonhitless. Sie sind derart aufgebaut, dass ein einem Eingang des wellenlängenselektiven Schalters, kurz WSS, zugeführtes eingangsseitiges Wellenlängen-Multiplexsignal in die einzelnen Wellenlängen-Multiplexkanäle bzw. Wellenlängen-Multiplexfrequenzbänder aufgeteilt wird und jeder Kanal bzw. jedes Band einem Umlenkspiegel zugeführt wird. Dabei werden jeweils wellenlängen- oder frequenzmäßig gleiche Kanäle der Eingänge einem Umlenkspiegel zugeführt. D.h. es gibt einen Spiegel pro Kanal bzw. Band. Dieser Umlenkspiegel ist bei eindimensionalen WSS nur in einer Ebene veränderbar. Durch die Stellung der Umlenkspiegel wird der jeweilige Kanal eines Eingangs auf einen Ausgang umgeleitet, so dass am Ausgang ein ausgangsseitiges Wellenlängen-Multiplexsignal gebildet und abgegeben wird.

Eine solche wellenlängenselektiver Schalter ist beispielsweise in dem Dokument WO 2005/011322 A (OLYMPUS CORP [JP]; NAKANO JUNICHI [JP]; MURAKAMI KENZI [JP]) 3. Februar 2005 (2005-02-03) offenbart.

Ein wellenlängenselektiver Schalter kann in analoger Weise nur einen Eingang und mehrere Ausgänge aufweisen. Dabei wird ein eingangsseitiges Wellenlängen-Multiplexsignal in die einzelnen Wellenlängen-Multiplexkanäle aufgeteilt wird und jeder Kanal bzw. jedes Band einem Umlenkspiegel zugeführt. Der Umlenkspiegel leitet einen Kanal auf einen bestimmten Ausgang um, so dass hier jeweils ein ausgangsseitiges Wellenlängen-Multiplexsignal gebildet und abgegeben wird. Ein Schaltvorgang wird beim eindimensionalen WSS durch Veränderung des Umlenkspiegels in einer Ebene durchgeführt, so dass das optische Signal eines Kanals von einem anderen Eingang zum Ausgang oder vom Eingang zu einem anderen Ausgang umgelenkt wird. Dabei wird während des Schaltvorganges der Umlenkspiegel geschwenkt. Dadurch wird jeweils eine Verbindung von allen zwischen dem "alten" und dem "neuen" Eingang bzw. Ausgang liegenden Eingängen bzw. Ausgängen hergestellt. Ist beispielsweise der erste Kanal vom dritten Eingang auf den Ausgang durchgeschaltet und soll nun der erste Kanal des siebenten Eingangs auf den Ausgang geschaltet werden, so wird während des Schaltvorganges der vierte Eingang, der fünfte Eingang und der sechste Eingang kurzzeitig mit dem Ausgang verbunden. Liegen an diesen Eingängen auf dem im Beispiel ersten Kanal nun optische Signale an, so kann dies zu kurzzeitigen "Leistungsspitzen" im optischen System führen, die stören und im Extremfall zum Zusammenbruch des Datenflusses bei dieser und anderen Kanälen führen können.

Ist in analoger Weise beispielsweise der vierte Kanal vom Eingang auf den zweiten Ausgang durchgeschaltet und soll nun auf den achten Ausgang geschaltet werden, so wird das Eingangssignal des vierten Kanals während des Schaltvorganges auf den dritten Ausgang, den vierten Ausgang, den fünften Ausgang, den sechsten Ausgang und den siebenten Ausgang kurzzeitig geschaltet, bis der achte Ausgang erreicht ist. Liegt während des Schaltvorganges am Eingang noch ein Signal an, wird auf jedem der dazwischen liegenden Ausgänge kurzzeitig ein optisches Signal abgegeben bzw. eine "Leistungsspitze" erzeugt, die zu bereits erwähnten Problemen führen kann.

Auch bei wellenlängenselektiven, mehrdimensionalen "hitless" Schaltern ist die Unterdrückung des Nebensprechens durch Schalter nicht immer vollständig, so dass auch hier im Betriebsfall Störungen durch andere Kanäle erfolgen.

Aufgabe der vorliegenden Erfindung ist es, einen wellenlängenselektiven Schalter zu verbessern.

Diese Aufgabe wird mit einem wellenlängenselektiven Schalter nach Anspruch 1 und ein Verfahren zum kanalweisen Schalten für einen wellenlängenselektiven Schalter nach Anspruch 7 gelöst.

Erfindungsgemäß wird, insbesondere bei eindimensionalen Schaltern, vor einem Schaltvorgang der zu schaltende Kanal durch ein abstimmbares, optisches Bandsperrfilter selektiert, so dass bei einem WSS mit einem Eingang der zu schaltende Kanal eingangsseitig gesperrt ist bzw. nicht zur Verfügung steht oder bei einem WSS mit einem Ausgang der zu schaltende Kanal ausgangsseitig gesperrt wird bzw. ausgangsseitig dieser Kanal nicht abgegeben wird, dann der Schaltvorgang durchgeführt wird und anschließend das Filter deselektiert wird, so dass alle Kanäle durchgelassen werden. Hierzu wird am Ein- bzw. Ausgang ein mit Kanalgranularität oder feiner abstimmbares optisches Bandsperrfilter angeordnet, das entsprechend gesteuert wird. Dies hat den Vorteil, dass durch den Schaltvorgang auftretende Leistungsspitzen ausgangsseitig nicht auftreten können bzw. eingangsseitig nicht "abgegriffen" werden können.

In vorteilhafter Weise wird statt eines Bandpasses ein Mehrfach-Wellenlängenblocker (Multi-Wavelength-Blocker) eingesetzt. Vor dem wellenlängenselektiven Schalter werden die zu dämpfenden Kanäle (gemeint sind die Signale, bzw. in dem Kanal wird ein entsprechendes Dämpfungsglied eingestellt) durch einen Mehrfach-Wellenlängenblocker selektiv unterschiedlich gedämpft, so dass die Signale schon eingangsseitig die erforderliche spektrale Verteilung der optischen Leistung haben; oder nach dem wellenlängenselektiven Schalter durch einen WSS mit einem Ausgang die Signale selektiv so gedämpft, dass sie ausgangsseitig die erforderliche spektrale Verteilung der optischen Leistungen erhalten. Hierzu wird am Ein- bzw. Ausgang ein spektral mindestens mit Kanal-Granularität bzgl. der Dämpfung programmierbares optisches Bandfilter angeordnet, das entsprechend gesteuert wird. Dies hat den Vorteil, dass die dem WSS inhärente Nebensprechunterdrückung nicht verringert wird durch eine kanalweise optische Dämpfung im WSS.

Die Erfindung sollte immer bei der Verwendung von eindimensionalen Schaltern eingesetzt werden, aber auch bei mehrdimensionalen Schaltern lassen sich Verbesserungen im Übersprechen erzielen. Insbesondere ermöglicht der Einsatz von Mehrfach-Wellenlängen sowohl eine einfache Kanalauswahl als auch die Verwendung als Equalizer, um die Pegel aller Kanäle auf den gleichen oder gewünschte Pegelwerte einzustellen.

Vorteilhafte Ausgestaltungen der Erfindung sind in den Unteransprüchen angegeben.

Ein Ausführungsbeispiel der Erfindung wird im Folgenden anhand der Zeichnung näher erläutert.

Dabei zeigt
- Figur 1: eine Zeichnung zur Erläuterung eines wellenlängenselektiven Schalter mit mehreren Eingängen und einem Ausgang,
- Figur 2: eine Zeichnung zur Erläuterung eines wellenlängenselektiven Schalter mit einem Eingang und mehreren Ausgängen,
- Figur 3: zwei erfindungsgemäße Anordnungen für ein eindimensionalen wellenlängenselektiven Schalter,
- Figur 4: einen optischen Netzknoten mit erfindungsgemäßen wellenlängenselektiven Schaltern und
- Figur 5: eine Variante mit einem weiteren wellenlängenselektiven Schalter.

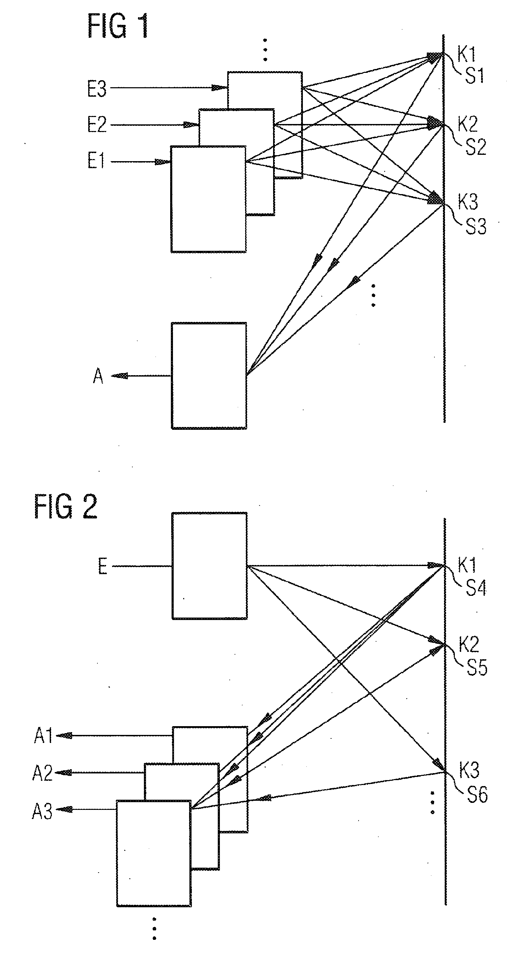

Figur 1 zeigt eine Zeichnung zur Erläuterung eines wellenlängenselektiven Schalters. Dieser weist mehrere Eingänge E1, E2, E3, ... auf denen jeweils ein Wellenlängenmultiplexsignal zugeführt wird. Dieses wird jeweils in seine Kanäle bzw. Wellenlängenbänder K1, K2, K3, ... aufgeteilt, wobei jeweils die gleichen Kanäle der Eingänge einem Spiegel zugeführt werden. Im Beispiel werden die ersten Kanäle K1 der Eingänge E1, E2, E3, ... dem ersten Spiegel bzw. Umlenkspiegel S1 zugeführt. Alle zweiten Kanäle K2 der Eingänge E1, E2, E3, ... dem zweiten Spiegel bzw. Umlenkspiegel S2 zugeführt. Alle dritten Kanäle K3 der Eingänge E1, E2, E3, ... dem dritten Spiegel bzw. Umlenkspiegel S3 zugeführt, usw.

Bei einem Schaltvorgang beispielsweise des ersten. Kanals K1 vom Eingang E1 zum Eingang E3 wird der Spiegel S1 derart gekippt, dass das optische Signal des dritten Eingangs nun zum Ausgang A übertragen wird. Dabei wird bei eindimensionalen WSS während des Schaltvorganges zwangsläufig der zweite Eingang E2 kurzzeitig mit dem Ausgang A verbunden, so dass eine Leistungsspitze auftreten kann, wenn am zweiten Eingang E2 auf dem ersten Kanal K1 ein optisches Signal anliegt.

Figur 2 zeigt eine Zeichnung zur Erläuterung eines weiteren wellenlängenselektiven Schalters gemäß Figur 1, mit dem Unterschied, dass ein Eingang und mehrere Ausgänge vorgesehen sind. Ein Wellenlängenmultiplexsignal, das dem Eingang E zugeführt wird, wird in seine Kanäle bzw. Wellenlängenbänder K1, K2, K3, ... aufgeteilt, die jeweils einem Spiegel zugeführt werden. Im Beispiel wird der erste Kanal K1 dem vierten Spiegel bzw. Umlenkspiegel S4 zugeführt, der zweite Kanal K2 dem fünften Spiegel bzw. Umlenkspiegel S5, der dritte Kanal K3 dem sechsten Spiegel bzw. Umlenkspiegel S6 zugeführt, usw. Diese leiten jeweils das optische Signal des jeweiligen Kanals auf einen der Ausgänge A1, A2, A3, ... um.
Bei einem Schaltvorgang beispielsweise des ersten Kanals K1 vom Ausgang A3 zum Ausgang A1 wird der Spiegel S4 derart gekippt, dass das optische Signal nun zum Ausgang A1 übertragen wird. Dabei wird bei eindimensionalen WSS während des Schaltvorganges zwangsläufig der zweite Ausgang A2 kurzzeitig mit dem Eingang E verbunden, so dass eine Leistungsspitze am Ausgang A2 auftreten kann, wenn am Eingang E ein optisches Signal anliegt.

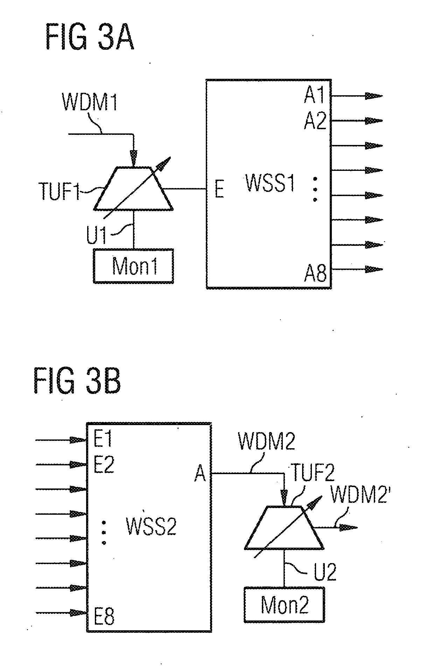

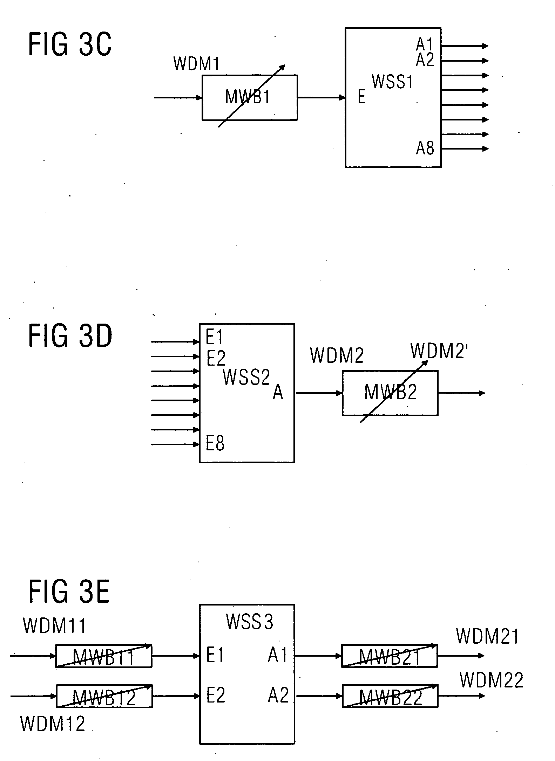

Figur 3a zeigt einen ersten wellenlängenselektiven Schalter WSS1 mit einem Eingang E und acht Ausgänge A1, ..., A8, dem erfindungsgemäß ein erstes abstimmbares, optisches Bandsperrfilter TUF1 vorgeschaltet ist. Dieses weist einen so genannten Überlaufanschluss U1 auf, an dem das gesperrte Band abgegeben wird. Im Beispiel gemäß Figur 3a ist hier eine Monitoreinrichtung Mon1 angeschaltet.
Ein Wellenlängen-Multiplexsignal WDM1 wird dem abstimmbaren, optischen Bandsperrfilter TUF1 zugeführt und gelangt hierüber zum ersten wellenlängenselektiven Schalter WSS1. Hier kann dieses an einem Ausgang komplett bzw. an verschiedenen Ausgängen jeweils ein entsprechend geschalteter Teil abgegeben werden.
Beispielsweise wird ein erster Kanal des eingangsseitigen Wellenlängen-Multiplexsignals WDM1 am Ausgang A2 abgegeben, ein zweiter Kanal am Ausgang A6, usw.
Soll der erste Kanal nun am Ausgang A7 abgegeben werden, so schaltet der eindimensionale wellenlängenselektive WSS1 diesen Kanal vom Ausgang A2 zum Ausgang A7 durch. Dabei wird kurzzeitig der erste Kanal am Ausgang 3, dann am Ausgang 4, am Ausgang 5, Ausgang 6 abgegeben, bis der endgültige Schaltzustand vom Ausgang 7 erreicht ist. Dabei treten kurzzeitig Signalspitzen an den zwischen liegenden Ausgängen auf, die vom ersten Kanal des Wellenlängen-Multiplexsignals WDM1 herrühren. Diese können zu unerwünschten Effekten in den an diesen Ausgängen nachgeschalteten Komponenten führen. Erfindungsgemäß wird nun vor einem Schaltvorgang, beispielsweise des ersten Kanals, das abstimmbare optische Bandsperrfilter TUF1 auf den ersten Kanal abgestimmt, so dass dieser Kanal nicht mehr zum Eingang des wellenlängenselektiven Schalters WSS1 gelangt. Alle anderen Kanäle bleiben davon unberührt, da nur der oder die zu schaltenden Kanäle gesperrt werden. Dann wird der Schaltvorgang im wellenlängenselektiven Schalter 1 durchgeführt, beispielsweise von Ausgang A2 zu Ausgang A7. Anschließend wird das abstimmbare optische Bandsperrfilter TUF1 deselektiert, so dass das komplette Wellenlängen-Multiplexsignal WDM1 wieder zum Eingang E des ersten wellenlängenselektiven Schalters WSS1 gelangt und somit auch der erste Kanal am Ausgang A7 abgegeben werden kann.

Figur 3b zeigt einen in analoger Weise invers aufgebauten bzw. betriebenen zweiten wellenlängenselektiven Schalter WSS2. Dieser weist mehrere Eingänge E1 bis E8 und einen Ausgang A auf. Seine Arbeitsweise ist analog zur Beschreibung zu Figur 1. Erfindungsgemäß ist am Ausgang A ein zweites abstimmbares, optisches Bandsperrfilter TUF2 angeschaltet. Dieses weist ebenfalls einen so genannten Überlauf U2 auf, an dem das oder die gesperrten Bänder bzw. Kanäle abgegeben werden. Im Beispiel ist hier lediglich eine Monitoreinrichtung Mon2 angeschaltet.
Den Eingängen E1, ..., E8 werden jeweils Wellenlängen-Multiplexsignale oder einzelne Kanäle hiervon zugeführt. Diese werden mittels des wellenlängenselektiven Schalters WSS2 zumindest teilweise zu einem Wellenlängen-Multiplexsignal WDM2 zusammengefasst, welches am Ausgang A abgegeben wird. Der wellenlängenselektive Schalter WSS2 kann auch mehrere Ausgänge aufweisen, die jeweils ein Wellenlängen-Multiplexsignal abgeben.
Erfindungsgemäß wird ein zu schaltender Kanal vor dem Schaltvorgang durch das zweite abstimmbare, optische Bandsperrfilter TUF2 gesperrt, der Kanal zu seinem neuen Eingang geschaltet und anschließend durchgelassen.
Ist beispielsweise vom Eingang E2 der dritte Kanal zum Ausgang geschaltet und soll vom Eingang E6 der dritte Kanal zum Ausgang A geschaltet werden, so dass der dritte Kanal nicht mehr vom Eingang E2 sondern vom Eingang E6 am Ausgang A abgegeben wird, so wird beim Umschaltvorgang gemäß dem Stand der Technik der dritte Kanal des Eingangs E3, dann des Eingangs E4, dann des Eingangs E5 abgegriffen, bis der endgültige Schaltzustand am Eingang E6 hergestellt ist. Liegen nun an den Eingängen E3 bis E5 auf den dritten Kanälen optische Signale mit unterschiedlichen Pegeln an, die eigentlich nicht zum Ausgang A durchgeschaltet werden sollen, so werden kurzzeitig Leitungsspitzen bzw. Signalspitzen am Ausgang A abgegeben, die zu Störungen führen können. Erfindungsgemäß wird nun vor einem Umschaltvorgang des dritten Kanals dieser durch das zweite abstimmbare optische Bandsperrfilter TUF2 gesperrt, der dritte Kanal vom Eingang E2 zu Eingang E6 umgeschaltet, nach dem Umschalten das abstimmbare optische Bandsperrfilter TUF2 wieder deselektiert, so dass alle Kanäle des Wellenlängen-Multiplexsignals WDM2 am abstimmbaren optischen Bandsperrfilter TUF2 als Wellenlängen-Multiplexsignals WDM2' abgegeben werden. Es versteht sich von selbst, dass auch mehrere Kanäle gleichzeitig umgeschaltet werden können und ein entsprechend angeordnetes abstimmbares optisches Bandsperrfilter die zu schaltenden Kanäle sperren muss.
Ferner kann ein wellenlängenselektiven Schalter WSS auch mehrere Ein- bzw. Ausgänge aufweisen, also ein m x n WSS sein, der an seinen Ein- bzw. Ausgängen erfindungsgemäß angeschaltete abstimmbare optische Bandsperrfilter aufweist.

Figur 3c zeigt einen ersten wellenlängenselektiven Schalter WSS1 mit einem Eingang E und acht Ausgängen A1, ..., A8, dem erfindungsgemäß ein Mehrfach-Wellenlängenblocker MWB1, dies ist ein pro Kanal programmierbares optisches Bandsperrfilter, vorgeschaltet ist.
Ein Wellenlängen-Multiplexsignal WDM1 wird dem Mehrfach-Wellenlängenblocker Bandfilter MWB1 zugeführt und gelangt hierüber zum ersten wellenlängenselektiven Schalter WSS1. Hier kann dieses an einem Ausgang komplett bzw. an verschiedenen Ausgängen jeweils ein entsprechend geschalteter Teil abgegeben werden.

Beispielsweise wird ein erster Kanal des eingangsseitigen Wellenlängen-Multiplexsignals WDM1 am Ausgang A2 abgegeben, ein zweiter Kanal am Ausgang A6, usw.
Soll der erste Kanal nun eine andere optische Leistung erhalten, so ändert man erfindungsgemäß im Mehrfach-Wellenlängenblocker MWB1 die Dämpfung für diesen Kanal.
Die Einstellungen im WSS1 bleiben davon unberührt.
In diesem WSS1 können die Anforderungen an die Nebensprechunterdrückung verschärft sein, da mehrere Signale im selben Spektralbereich durch den WSS1 laufen können, und sich gemeinsam am Ausgangsport störend überlagern können. Nicht genutzte Kanäle können ausgeblendet werden und bei den übrigen Kanälen können die gewünschten Pegel eingestellt werden.

Figur 3d zeigt einen in analoger Weise einen "invers" aufgebauten bzw. betriebenen zweiten wellenlängenselektiven Schalter WSS2. Dieser weist mehrere Eingänge E1 bis E8 und einen Ausgang A auf. Seine Arbeitsweise ist analog zur Beschreibung zu Figur 1. Erfindungsgemäß ist am Ausgang A ein Mehrfach-Wellenlängenblocker MWB2 angeschaltet.
Den Eingängen E1, ..., E8 werden jeweils Wellenlängen-Multiplexsignale oder einzelne Kanäle hiervon zugeführt. Diese werden mittels des wellenlängenselektiven Schalters WSS2 zumindest teilweise zu einem Wellenlängen-Multiplexsignal WDM2 zusammengefasst, welches am Ausgang A abgegeben wird. Der wellenlängenselektive Schalter WSS2 kann auch mehrere Ausgänge aufweisen, die jeweils ein Wellenlängen-Multiplexsignal abgeben. Die in ihren Ausgangsleistungen zu verändernde Kanäle werden durch den zweiten Mehrfach-Wellenlängenblocker MWB2 durch unterschiedliche Dämpfungen verändert.

Die einzelnen Kanäle werden mittels des wellenlängenselektiven Schalters WSS2 zumindest teilweise zu einem Wellenlängen-Multiplexsignal WDM2 zusammengefasst, welches am Ausgang A abgegeben wird. Der wellenlängenselektive Schalter WSS2 kann auch mehrere Ausgänge aufweisen, die jeweils ein Wellenlängen-Multiplexsignal abgeben.

Ein in seiner Ausgangsleistung zu verändernde Kanal wird durch den Mehrfach-Wellenlängenblocker MWB2 in seiner Dämpfung verändert, und die Einstellungen im WSS2 bleiben davon unberührt. Natürlich gilt dies auch wieder für mehrere Kanäle, die gleichzeitig in ihrer Ausgangsleistung geändert werden können.

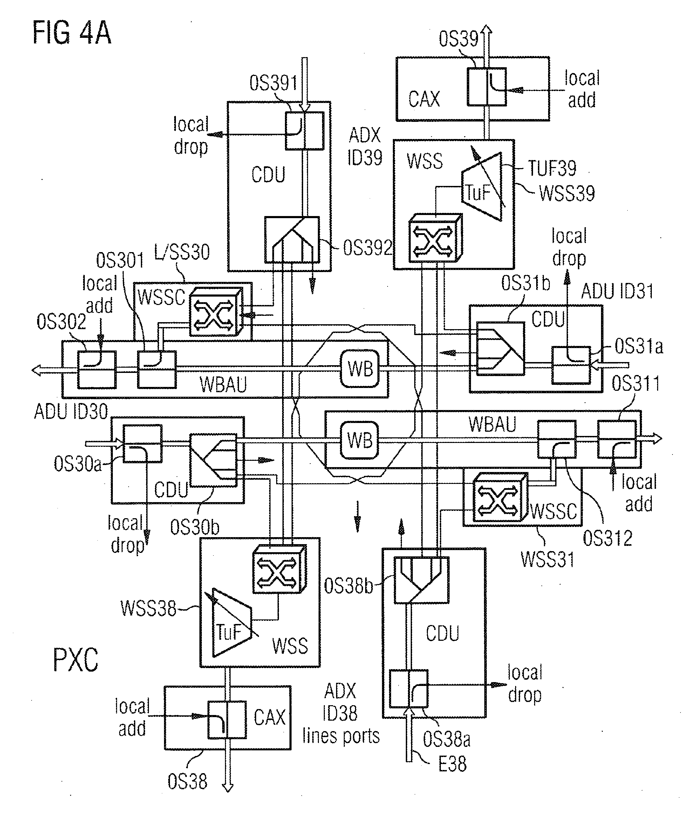

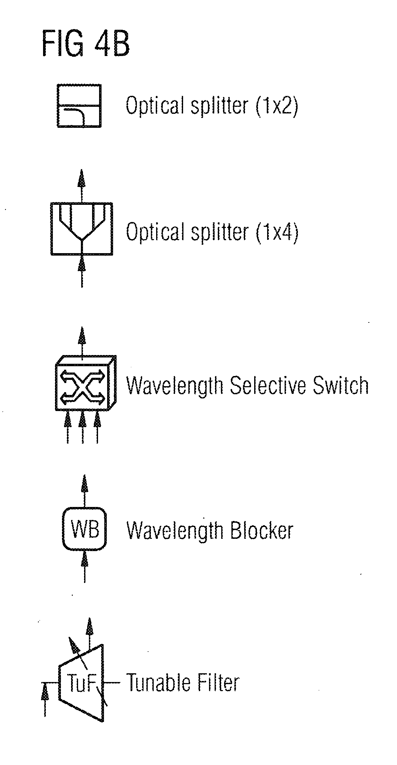

Figur 4 zeigt einen optischen Netzknoten PXC, der erfindungsgemäße wellenlängenselektive Schalter aufweist. Hierbei ist einem Teil der wellenlängenselektiven Schalter WSS jeweils ein abstimmbares optische Bandsperrfilter TUF nachgeschaltet.
Der optische Netzknoten PXC weist mehrere Ein- und Ausgänge bzw. Line Ports ID30, ID31, ID38, ID39 auf. Ein Wellenlängenmultiplex-Signal E38 wird dem Line Port ID38 zugeführt. Hier gelangt es auf einem ersten optischen Splitter OS38a, der ein lokales Signal abzweigt, dann auf einen zweiten optischen Splitter OS38b, der das WDM-Signal E38 jeweils an die Ausgangsrichtungen abgibt. Im Beispiel gelangt das Signal zu den Line Ports ID30, ID31, ID39. Das WDM-Signal, das zum Line Port ID39 gelangt, wird hier einem dritten erfindungsgemäßen wellenlängenselektiven Schalter WSS39 zugeführt, der ein ausgangsseitiges abstimmbares, optisches Bandsperrfilter TUF39 aufweist. Dem Schalter WSS39 schließt sich ein weiterer als Kombiner betriebener Splitter OS39 an. Dem wellenlängenselektiven Schalter WSS39 werden WDM-Signale anderer Line Ports zugeführt, beispielsweise vom Line Port ID31, ID30.
Dieser Aufbau ist für die anderen Richtungen in analoger Weise realisiert. Zudem kann zwischen einem zweiten optischen Splitter und einem wellenlängenselektiven Schalter oder einem Combiner, dies kann ein als Combiner betriebener Splitter sein, ein Wellenlängenblocker WB geschaltet sein, um gewisse Wellenlängen, beispielsweise für "local add" and "local drop", zu sperren, wie in Figur 4 gezeigt.

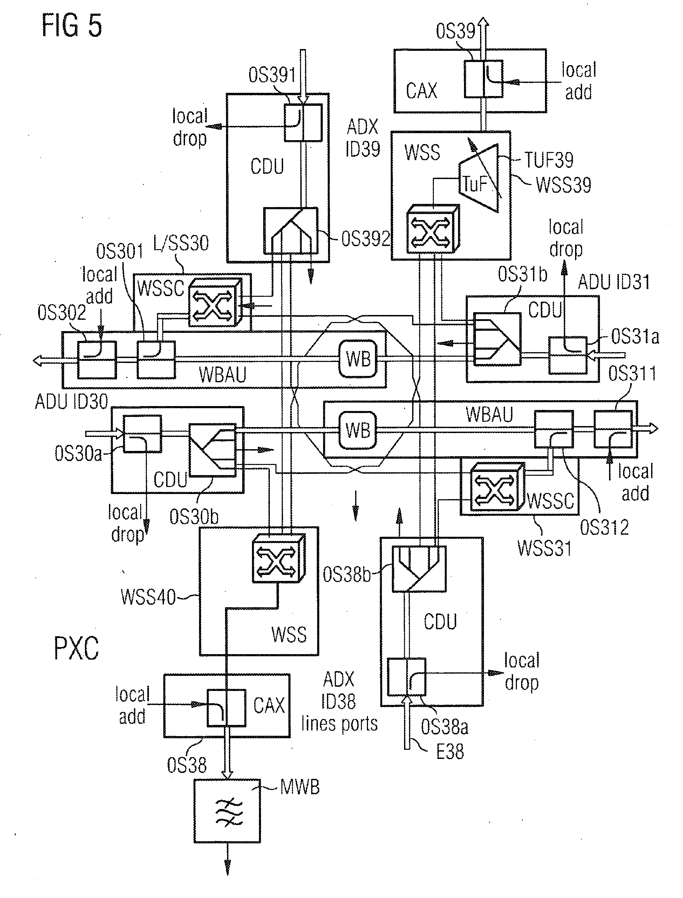

Figur 5 zeigt eine Variante mit einem weiteren Mehrfach-Wellenlängenblocker MWB. Dieser ist einem wellenlängenselektiven Schalter WSS40, der den WSS38 aus Figur 4A ersetzt, und dem Combiner OS38, nachgeschaltet. Der Mehrfach-Wellenlängenblocker MWB arbeitet als kanalweiser Equalizer während des Betriebes und/oder als Signalblockierer während des Umschaltens/Umarrangierens von Kanälen. Der Mehrfach-Wellenlängenblocker MWB wird nach Zusammenführen aller Kanäle am Ausgang angeordnet. Auch am Eingang des WSS1 In Fig. 3a kann der MWB vorteilhaft eingesetzt werden.

## Patentansprüche

1. Wellenlängenselektiver Schalter (WSS1, WSS2) für mehrere Kanäle aufweisende Wellenlängen-Multiplexsignale (WDM1, WDM2),
**dadurch gekennzeichnet,**
**dass** der wellenlängenselektive Schalter (WSS1, WSS2) an mindestens einem Ein- oder Ausgang ein abstimmbares, optisches Bandsperrfilter (TUF1, TUF2) aufweist und eine Steuerung vorgesehen ist, die derart ausgestaltet ist, dass vor einem Schaltvorgang des Schalters (WSS1, WSS2) ein zu schaltender Kanal mittels des Bandsperrfilters (TUF1, TUF2) gesperrt wird, der Schaltvorgang durchgeführt und anschließend der Kanal entsperrt wird.

2. Wellenlängenselektiver Schalter nach Anspruch 1,
wobei
der wellenlängenselektive Schalter (WSS1) mindestens einen Eingang (E) und mehrere Ausgänge (A1, ..., A8) aufweist, dem Eingang (E) das abstimmbare, optische Bandsperrfilter (TUF1) vorgeschaltet ist, und die Steuerung bei einer Umschaltung eines eingangsseitigen Kanals von einem ersten zu einem zweiten Ausgang den zuschaltenden Kanal sperrt.

3. Wellenlängenselektiver Schalter nach Anspruch 1, wobei
der wellenlängenselektive Schalter (WSS2) mindestens einen Ausgang (A) und mehrere Eingänge (E1, ..., E8) aufweist, an den Ausgang (A) das abstimmbare, optische Bandsperrfilter (TUF2) nachgeschaltet ist, und die Steuerung bei einer Umschaltung eines am Ausgang zur Verfügung stehenden Kanals von einem ersten zu einem zweiten Eingang den zuschaltenden Kanal sperrt.

4. Wellenlängenselektiver Schalter nach Anspruch 1, 2 oder 3,
wobei
das abstimmbare, optische Bandsperrfilter (TUF1, TUF2) einen optischen Überlaufanschluss aufweist, an dem der jeweils gesperrte Kanal zur Verfügung steht.

5. Wellenlängenselektiver Schalter nach Anspruch 4,
wobei
an dem Überlaufanschluss ein Monitoreinrichtung (Mon1, Mon2) angeschaltet ist.

6. Wellenlängenselektiver Schalter nach einem der vorhergehenden Ansprüche,
wobei
anstatt des optischen Bandsperrfilters (TUF1, TUF2) ein Mehrfach-Wellenlängenblocker (MWB) angeordnet ist, der als Equalizer verwendet wird.

7. Wellenlängenselektiver Schalter nach einem der vorhergehenden Ansprüche, wobei
er als ein eindimensionaler wellenlängenselektiver Schalter ausgeführt ist.

8. Optischer Netzknoten (PXC), aufweisend mindestens einen Wellenlängenselektiven Schalter (WSS1, WSS2) nach einem der Ansprüche 1 bis 7.

9. Verfahren zum kanalweisen Schalten für einen wellenlängenselektiven Schalter (WSS1, WSS2), dem ein mehrere Kanäle aufweisendes Wellenlängen-Multiplexsignal (WDM1, WDM2) zugeführt wird,
**dadurch gekennzeichnet,**
**dass** dem wellenlängenselektiven Schalter (WSS1, WSS2) ein abstimmbares, optisches Bandsperrfilter (TUF1, TUF2) vor- oder nachgeschaltet wird,
**dass** vor einem Schaltvorgang des wellenlängenselektiven Schalters (WSS1, WSS2) das abstimmbare optische Bandsperrfilter (TUF1, TUF2) die zu schaltende Kanalfrequenz sperrt,
**dass** anschließend der Schaltvorgang des wellenlängenselektiven Schalters (WSS1, WSS2) durchgeführt wird und
**dass** nach dem Schaltvorgang das abstimmbare optische Bandsperrfilter (TUF1, TUF2) die geschaltete Kanalfrequenz entsperrt.

10. Verfahren nach Anspruch 9,
wobei
der wellenlängenselektive Schalter (WSS1) einen Eingang (E) und mehrere Ausgänge (A1, ..., A8) aufweist und dem Eingang (E) das abstimmbare, optische Bandsperrfilter (TUF1) vorgeschaltet wird,
dass bei einer Umschaltung eines eingangsseitigen Kanals von einem ersten zu einem zweiten Ausgang der zuschaltende Kanal gesperrt wird.

11. Verfahren nach Anspruch 9,
wobei
der wellenlängenselektive Schalter (WSS2) einen Ausgang (A) und mehrere Eingänge (E1, ..., E8) aufweist und dem Ausgang (A) das abstimmbare, optische Bandsperrfilter (TUF2) nachgeschaltet wird,
dass bei einer Umschaltung eines am Ausgang zur Verfügung stehenden Kanals von einem ersten zu einem zweiten Eingang der zuschaltende Kanal gesperrt wird.

12. Verfahren nach Anspruch 9,
wobei
statt des abstimmbaren, optische Bandsperrfilters (TUF2) ein Mehrfach-Wellenlängenblocker (MWB) eingesetzt ist, der als Equalizer verwendet wird.

13. Verfahren nach einem der Ansprüche 9 bis 12,
wobei
bei der Durchführung des Verfahrens ein eindimensionaler wellenlängenselektiver Schalter (WSS1, WSS2) verwendet wird.

## Claims

1. Wavelength-selective switch (WSS1, WSS2) for wavelength-division multiplex signals (WDM1, WDM2) having a plurality of channels, **characterized in that**
the wavelength-selective switch (WSS1, WSS2) has at at least one input or output a tuneable, optical band-stop filter (TUF1, TUF2), and a controller is provided which is designed in such a manner that before a switching process of the switch (WSS1, WSS2), a channel to be switched is blocked by means of the band-stop filter (TUF1, TUF2), the switching process is carried out and subsequently the channel is deblocked.

2. Wavelength-selective switch according to Claim 1, **characterized in that** the wavelength-selective switch (WSS1, WSS2) has at least one input (E) and a plurality of outputs (A1, ..., A8), the input (E) is preceded by the tuneable, optical band-stop filter (TUF1) and the controller, during a switch-over of a channel at the input from a first to a second output blocks the channel to be switched.

3. Wavelength-selective switch according to Claim 1, **characterized in that** the wavelength-selective switch (WSS2) has at least one output (A) and a plurality of inputs (E1, ..., E8), the tuneable, optical band-stop filter (TUF2) is connected after the output (A) and the controller, during a switch-over of a channel available at the output from a first to a second input blocks the channel to be switched.

4. Wavelength-selective switch according to Claim 1, 2 or 3, **characterized in that** the tuneable, optical band-stop filter (TUF1, TUF2) has an optical overflow terminal at which the channel blocked in each case is available.

5. Wavelength-selective switch according to Claim 4, **characterized in that** a monitor device (Mon1, Mon2) is connected to the overflow terminal.

6. Wavelength-selective switch according to one of the preceding claims, **characterized in that**, instead of the optical band-stop filter (TUF1, TUF2), a multiple wavelength blocker (MWB) is arranged which is used as equalizer.

7. Wavelength-selective switch according to one of the preceding claims, **characterized in that** it is designed as a unidimensional wavelength-selective switch.

8. Optical network node (PXC) having at least one wavelength-selective switch (WSS1, WSS2) according to one of Claims 1 to 7.

9. Method for channel-by-channel switching for a wavelength-selective switch (WSS1, WSS2) which is supplied with a wavelength-division multiplex signal (WDM1, WDM2) having a plurality of channels, **characterized in that** the wavelength-selective switch (WSS1, WSS2) is preceded or followed by a tuneable, optical band-stop filter (TUF1, TUF2),
**in that**, before a switching process of the wavelength-selective switch (WSS1, WSS2), the tuneable, optical band-stop filter (TUF1, TUF2) blocks the channel frequency to be switched,
**in that** subsequently the switching process of the wavelength-selective switch (WSS1, WSS2) is performed and
**in that**, after the switching process, the tuneable, optical band-stop filter (TUF1, TUF2) deblocks the channel frequency switched.

10. Method according to Claim 9, **characterized in that** the wavelength-selective switch (WSS1) has one input (E) and a plurality of outputs (A1, ..., A8) and the tuneable, optical band-stop filter (TUF1) precedes the input (E),
**in that**, during a switch-over of a channel at the input from a first to a second output, the channel to be switched is blocked.

11. Method according to Claim 9, **characterized in that** the wavelength-selective switch (WSS2) has one output (A) and a plurality of inputs (E1, ..., E8) and the tuneable, optical band-stop filter (TUF2) follows the output (A),
**in that**, during a switch-over of a channel available at the output from a first to a second input, the channel to be switched is blocked.

12. Method according to Claim 9, **characterized in that**, instead of the tuneable, optical band-stop filter (TUF2), a multiple wavelength blocker (MWB) is utilized which is used as equalizer.

13. Method according to one of Claims 9 to 12, **characterized in that**, during the performance of the method, a unidimensional wavelength-selective switch (WSS1, WSS2) is used.

## Revendications

1. Commutateur sélectif en longueur d'onde (WSS1, WSS2) pour des signaux de multiplexage en longueur d'onde (WDM1, WDM2) comportant plusieurs canaux, **caractérisé en ce que** le commutateur sélectif en longueur d'onde (WSS1, WSS2) comporte, au niveau d'au moins une entrée ou sortie, un filtre bloque-bande optique syntonisable (TUF1, TUF2) et **en ce qu'**est prévue une commande qui se présente de manière telle qu'un canal à commuter est bloqué au moyen du filtre bloque-bande (TUF1, TUF2) préalablement à une opération de commutation du commutateur (WSS1, WSS2), l'opération de commutation est exécutée et le canal est ensuite débloqué.

2. Commutateur sélectif en longueur d'onde selon la revendication 1, le commutateur sélectif en longueur d'onde (WSS1) comportant au moins une entrée (E) et plusieurs sorties (A1, ..., A8), le filtre bloque-bande optique syntonisable (TUF1) étant situé en amont de l'entrée (E) et la commande bloquant le canal à commuter lors d'une commutation d'un canal côté entrée d'une première sur une deuxième sortie.

3. Commutateur sélectif en longueur d'onde selon la revendication 1, le commutateur sélectif en longueur d'onde (WSS2) comportant au moins une sortie (A) et plusieurs entrées (E1, ..., E8), le filtre bloque-bande optique syntonisable (TUF2) étant situé en aval de la sortie (A) et la commande bloquant le canal à commuter lors d'une commutation d'un canal disponible à la sortie d'une première sur une deuxième entrée.

4. Commutateur sélectif en longueur d'onde selon la revendication 1, 2 ou 3, le filtre bloque-bande optique syntonisable (TUF1, TUF2) comportant un raccordement optique de trop-plein au niveau duquel le canal respectivement bloqué est disponible.

5. Commutateur sélectif en longueur d'onde selon la revendication 4, un dispositif de moniteur (Mon1, Mon2) étant raccordé au raccordement de trop-plein.

6. Commutateur sélectif en longueur d'onde selon l'une des revendications précédentes, un multi-bloqueur de longueurs d'onde (MWB) utilisé comme égaliseur étant positionné en lieu et place du filtre bloque-bande optique (TUF1, TUF2).

7. Commutateur sélectif en longueur d'onde selon l'une des revendications précédentes, ledit commutateur étant réalisé en tant que commutateur sélectif en longueur d'onde unidimensionnel.

8. Noeud de réseau optique (PXC), comportant au moins un commutateur sélectif en longueur d'onde (WSS1, WSS2) selon l'une des revendications 1 à 7.

9. Procédé de commutation canal par canal pour un commutateur sélectif en longueur d'onde (WSS1, WSS2) sur lequel est envoyé un signal de multiplexage en longueur d'onde (WDM1, WDM2) comportant plusieurs canaux, **caractérisé en ce que** :
- un filtre bloque-bande optique syntonisable (TUF1, TUF2) est situé en amont ou en aval du commutateur sélectif en longueur d'onde (WSS1, WSS2) ;
- préalablement à une opération de commutation du commutateur sélectif en longueur d'onde (WSS1, WSS2), le filtre bloque-bande optique syntonisable (TUF1, TUF2) bloque la fréquence de canal à commuter ;
- l'opération de commutation du commutateur sélectif en longueur d'onde (WSS1, WSS2) est ensuite exécutée ; et
- après l'opération de commutation, le filtre bloque-bande optique syntonisable (TUF1, TUF2) débloque la fréquence de canal commutée.

10. Procédé selon la revendication 9, le commutateur sélectif en longueur d'onde (WSS1) comportant une entrée (E) et plusieurs sorties (A1, ..., A8) et le filtre bloque-bande optique syntonisable (TUF1) étant situé en amont de l'entrée (E) et le canal à commuter étant bloqué lors d'une commutation d'un canal côté entrée d'une première sur une deuxième sortie.

11. Procédé selon la revendication 9, le commutateur sélectif en longueur d'onde (WSS2) comportant une sortie (A) et plusieurs entrées (E1, ..., E8) et le filtre bloque-bande optique syntonisable (TUF2) étant situé en aval de la sortie (A) et le canal à commuter étant bloqué lors d'une commutation d'un canal disponible à la sortie d'une première sur une deuxième entrée.

12. Procédé selon la revendication 9, un multi-bloqueur de longueurs d'onde (MWB) utilisé comme égaliseur étant mis en oeuvre en lieu et place du filtre bloque-bande optique syntonisable (TUF2).

13. Procédé selon l'une des revendications 9 à 12, un commutateur sélectif en longueur d'onde unidimensionnel (WSS1, WSS2) étant utilisé pour exécuter le procédé.
